# EUROPEAN PATENT APPLICATION

(11) **EP 0 554 050 A1**
(43) Date of publication of application: **04.08.1993**
(21) Application number: 93300557.1
(22) Date of filing: 26.01.1993
(51) Int. Cl.: B60T 17/08

(54) **Fluid pressure operable actuators**

(30) Priority: 28.01.1992 GB 9201773; 11.07.1992 GB 9214778; 20.08.1992 GB 9217747
(71) Applicant: ALLIEDSIGNAL LIMITED, Kingswood, Bristol BS15 2NL (GB)
(72) Inventor: Fisher, Paul Anthony, Hanham, Bristol BS15 3JW (GB); Burlington, Geoffrey Michael, Crowborough, East Sussex TN6 3NH (GB); Bowden, Paul Anthony, Warmley, Bristol BS15 5XQ (GB)
(74) Representative: Turner, Alan Reginald

(57) **Abstract**

In a combined service brake actuator and spring force brake actuator, the spring force actuator portion has a tubular force output member (40) which passes through a seal assembly (41) to act against the push-rod assembly of the service brake actuator and a breather check valve arrangement (49) is provided carried by the tubular output member (40) the check valve having an actuation device which responds to pressure drop in the non-pressure chamber of the spring force actuator to unseat the check valve allowing air flow thereto from the service brake circuit.

## Description

This invention relates to fluid pressure operable actuators and especially but not exclusively to spring brake actuators.

Fluid pressure operable spring brake actuators are typically employed as secondary and/or parking brake actuators in compressed air operable brake systems of heavy road vehicles. A typical such actuator comprises a cylindrical body defining an internal bore and a fluid pressure responsive member (typically a piston( sealingly movable in the bore. A heavy spring is retained under compression between one side of the pressure !responsive member and one end of the cylinder. Application of fluid pressure to the other side of the pressure responsive member maintains the spring under full compression and holds an output rod member in a fully withdrawn position. In such position no force is applied to the brake by the spring. A brake application is then effected by partial or full venting of the fluid pressure and in order to effect release of the brake without applying fluid pressure it is usual to provide a screw-threaded member which is accessible from the outside operable to draw the pressure responsive member towards its full release position in the cylinder. In order to accommodate such a screw-threaded member in the fully retracted position it is usual that the output rod is tubular in section. Moreover such tubular member normally extends outwardly through a seal retained in an axial machined aperture of the cylinder and in the case of a combined spring actuator and service actuator the output member may act against a diaphragm of the service portion.

In order to reduce the influx of contaminants into the region which houses the heavy spring of the spring brake it has become accepted practice to provide a connecting breather pipe between that region and the non-pressure chamber of the service brake portion of a combined spring and service actuator. Such a breather pipe is typically simply connected externally between plastic elbows and is less than an ideal arrangement as it may become broken or dislodged.

The object of the present invention is to provide an actuator with an improved breathing arrangement which avoids a need for an external breather pipe.

According to the present invention there is provided a fluid pressure operable actuator comprising a fluid pressure responsive member forming a movable wall in a housing said wall separating a control pressure chamber from a further chamber, said control pressure chamber being arranged to receive a control fluid pressure to move said member in a first direction and means operable to move said member in a second direction in response to a reduction of said control pressure to apply a force to an output member characterised by a normally closed breather valve being provided in a fluid flow path between said further chamber and a fluid source and a valve actuator for opening said breather valve in response to a reduction of the pressure in said further chamber below a predetermined valve.

Said breather valve comprises a check valve and said actuator may comprise an aneroid element a piston, or a diaphragm assembly located in a region connected to the fluid flow path to be subject to the pressure in said further chamber.

In order that the invention may be further understood and readily carried into effect the same will be described with reference to the accompanying drawings of which
Fig. 1 illustrates an example of a spring brake actuator utilising the invention,
Fig. 2 illustrates an enlarged sectional view of a breather valve assembly included in the actuator of Fig. 1,
Fig. 3 illustrates an enlarged sectional view of an alternative breather valve assembly employing a pressure responsive piston and
Fig. 4 illustrates an enlarged view of yet a further alternative breather valve assembly employing a pressure responsive diaphragm assembly.

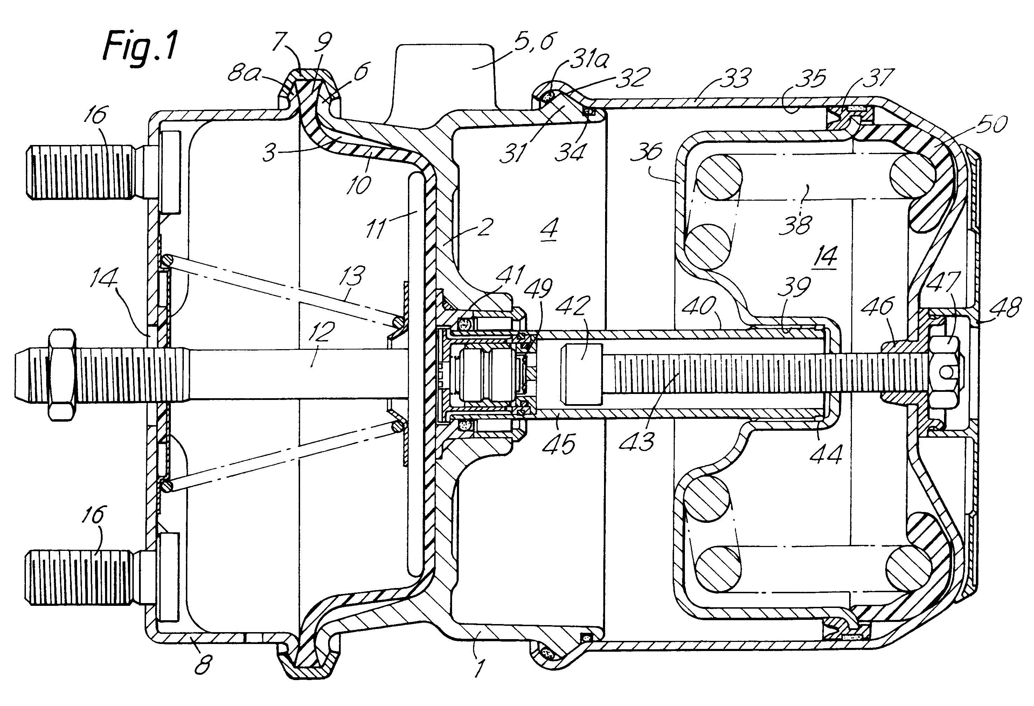

Referring to Fig. 1 of the drawings a combined spring brake actuator and compressed air operable service brake actuator comprises a middle body casting denoted by reference 1. Such casting is formed by pressure die casting aluminium alloy and provides a dividing wall 2 between a pressure chamber 3 of the service brake portion and a control pressure chamber 4 of the spring brake portion. These chambers communicate via respective passages (not shown) with twin input ports denoted at 5, 6 formed on the outside of the casting.

On the left hand end of the casting, 1 as seen in the drawing, there is formed a peripheral lip portion 6 to receive a pressed steel clamp ring 7 to clamp the peripheral bead 9 of a dish-shaped diaphragm 10 between lip 6 and a corresponding lip 8a of a non-pressure portion 8 of the service actuator portion. Diaphragm 10 acts against a push-plate 11 carrying the screw-threaded actuator output rod. The push-plate is urged towards the normal rest condition as shown by means of a light conical return spring 13 captive between the push-plate and the non-pressure portion of the actuator body, the actuator rod extending outwardly through a central aperture 14 thereof for connection to a brake mechanism of a vehicle. The wider end of the conical spring 14 is located by means of an annular locating plate positioned within the non-pressure portion between the heads of mounting studs 16 which are welded in position to project through respective apertures for mounting the actuator in known manner.

On the right hand end of the middle casting 1 as seen in the drawing there is a peripheral lip portion 31 to retain a rolled-over end 32 of a pressed steel cylinder 33 of the spring brake actuator portion. The rolled end 32 and lip 31 trap a retaining ring 31a in known manner and an annular seal 34 is provided between the casting 1 and the cylinder 33. Axially sealingly slideable in the bore 35 of cylinder 33 there is provided a piston 36 with an annular piston seal and piston guide assembly 37. This piston forms a movable wall between the chamber 4 and a further chamber 14. A power spring 38 is located in chamber 14 and trapped under compression between the piston 36 and a spring support member 50 at the right hand end of the cylinder 33. The spring 38 is shown in its fully compressed condition such as it is when in use with full pressure applied to the chamber 4. The piston 36 is formed with a central recess 39 which accommodates seal 44 and a screwed-in spring actuator output member 40 which extends outwardly through a axial seal arrangement 41 in the central wall 2 to abut the right hand side of diaphragm 10. The output member 40 is tubular to accommodate and enclose the head 42 of a spring wind-off bolt 43 and the interior 45 and freely communicates with chamber 14. The wind-off bolt 43 which is normally in the position shown, is carried in a threaded member 46 captive in the right hand end wall of the cylinder and is provided with a keyed-on nut 47. A snap-on end cover 48 on member 46 has an aperture which affords access to the nut 47 to permit turning of the bolt 43.

The axial seal assembly 41, is constructed as described for example in the Specification of co-pending Application No. 9124349.3 and serves to sealingly and supportingly guide the tube 40 for axial movement in the wall 2.

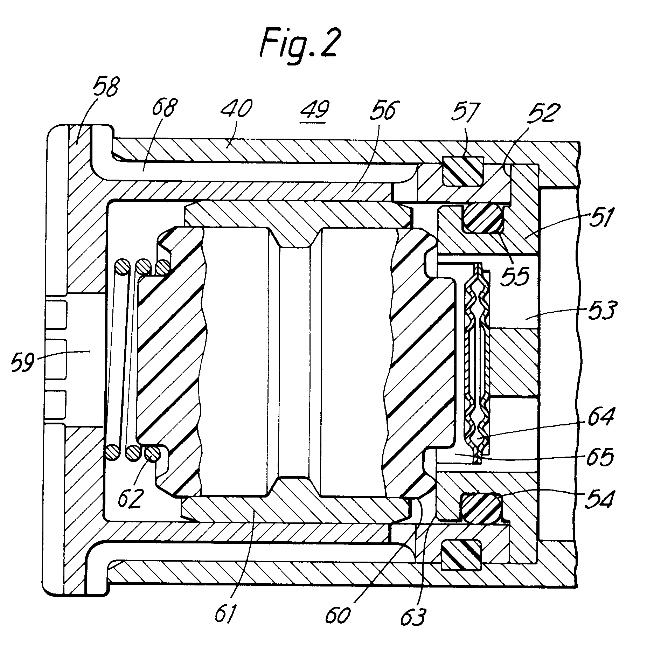

Referring now to the enlarged scale illustration of the breather valve and valve actuator assembly 49 as illustrated in Fig. 2, the left hand open end of tube 40 accommodates a breather valve and actuator insert assembly. This assembly comprises a generally annular insert 51 which is axially located on an internal shoulder 52 in the bore of the tube 40. This insert has a ring of apertures 53 and a spigot carrying an o-ring groove 54 housing an o-ring 55 providing a seal internally of a further generally cylindrical insert 56 which abuts the insert 51 and seals with the bore at 57. The insert 56 has an end 58 with a central aperture 59 and loosely movable within 56 there is a check valve member 60,61 urged by a light captive spring 62 sealingly against the left hand inner surface 63 of insert 51. An aneroid element 64 is carried in a recess 65 of 51 and dimensioned with the valve member 60 to be able to lift 60 off seating surface 63 when a significant depression occurs in the interior 53 of tube 40. The region around the valve member is in communication via a passage 68 and via passage 59 with the chamber 3 of the service portion.

In operation of the brake actuator of Fig. 1, for normal running the chamber 4 is subject to spring-brake hold-off pressure so that piston 36 is maintained in the position shown in Fig. 1 with spring 38 fully compressed. Service braking is effected by a braking pressure applied to chamber 3 to urge the plate 11 and rod 12 to the left to apply the brakes. In the case of secondary or parking brake operation, the pressure in chamber 4 is reduced permitting the piston 36 to move leftwards under the action of spring 38 such that the tube 40 acts on the right hand side of the service diaphragm 10 to apply the brakes. Such leftward movement results in an increase of volume of chamber 14 with a corresponding reduction of pressure which results in axial expansion of the aneroid element 64 to lift the check valve member 60 off its seat at surface 63. Accordingly, a backflow of pressure from the service brake circuit or at least chamber 3 can occur as indicated by the arrow in Fig. 2 to at least partially compensate for the effect of the volume reduction. Upon recovery of the spring-brake hold-off pressure, the piston 36 returns to the position shown and resultant tendency for the pressure in chamber 14 to rise is relieved by temporary forward flow in check-valve manner via a pressure lifting of element 60 from its seat 63.

By such means it is not necessary to provide atmospheric breathing means to chamber 14 of the spring-brake and the possibility of introduction of contaminants into the chamber 14 is further reduced.

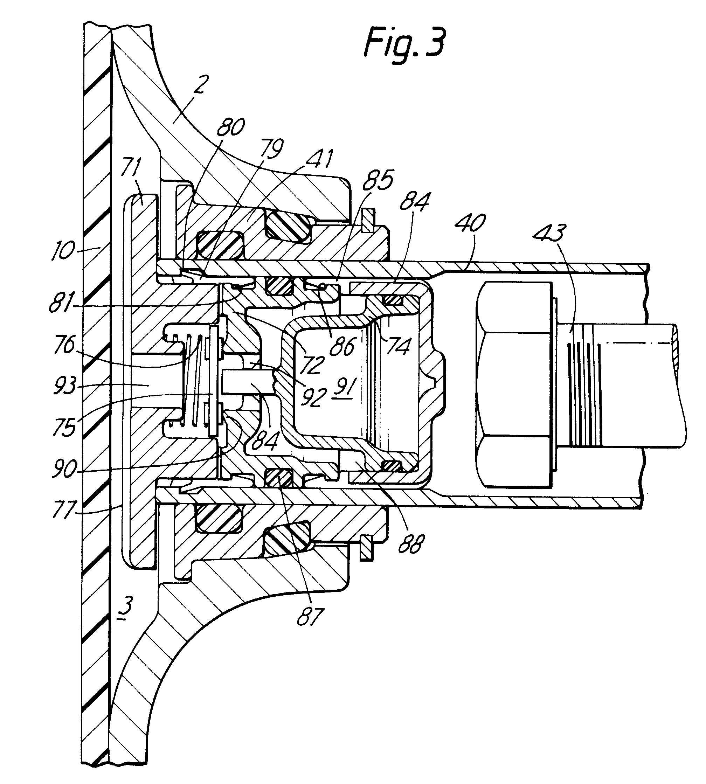

An alternative form of breather valve using moulded components is illustrated in Fig. 3.

In the enlarged sectional view of Fig. 3 the seal assembly 41 and a breather valve provided in the left-hand end of the actuator tube 40 of Fig. 1 are shown. The breather valve assembly is constructed largely of moulded molybdenum-filled plastic components and the assembly forms a closure for the end of the tube. Three main components 71, 72 and 73 are mutually snap-fitted together after insertion of a piston element 74 and a check valve element 75 together with its spring 76. Component 71 provides a pressure pad surface 77 which bears against the diaphragm 10 and has an inward projecting portion carrying non-sealing peripherally spaced snap-fitting catch finger portions 79 which engage annular abutments 80, 81 formed respectively inside tube 40 and component 72. Component 73 is a close fit with the tube 40 but has axial air-ways such as 84. Component 73 has peripherally spread snap-fitting portions 85 which engage with an annular abutment 86 at one end of 72. Component 72 is also provided with an o-ring 87 providing sealing within the tube after assembly. The piston 74 is sealingly slideable within an inner bore 88 of component 73 and has a stem 89 which extends through an aperture 92 and can lift the valve element 78 off its seal 90 when driven leftwards by air pressure within the closed volume 91 enclosed by 73 and 74. Such unseating of valve element 75 provides air communication between the interior of tube 40 and the region 3 by way of air-way 84, aperture 92 and a centre port 93 of component 71.

In operation of the breather valve of Fig. 3, when the actuator is at rest with no compressed air applied to either portion, the pressures in chamber 3, volume 91 and tube 40 will be at or near atmospheric. When compressed air is applied to the chamber 4 of the spring brake portion the volume 14 (Fig. 1) is reduced and the increasing pressure in tube 40 is relieved via passages 84 and 92, check valve 75 and past portion 79 to the volume 3. From 3 such air flow is released via the service valve or relay valve as the case may be. Chamber 14 therefore resides at or near atmospheric pressure.

When the pressure in spring brake control chamber 4 is reduced to effect a brake application, the resultant reduction in pressure in chamber 14 enables the higher pressure contained in volume 91 to cause piston 74 to lift the check valve element 75 off its seat thereby permitting air to be drawn back into tube 40 via passage 93, aperture 92 and air-way 84. A subsequent service brake application if made causes valve element 75 to reset after the pressure in 40 is restored to a sufficient level to enable piston 74 to move to the position shown in the drawing.

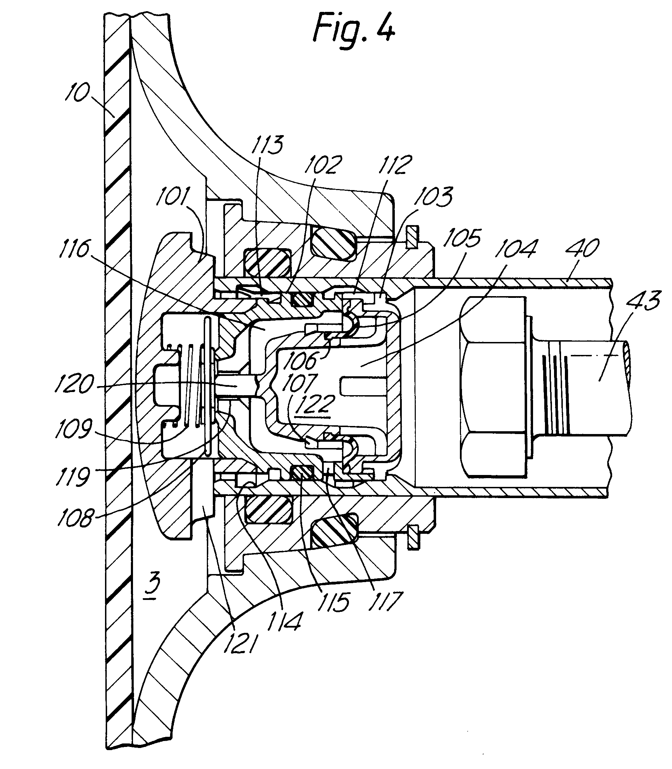

For yet another alternative construction of the breather valve reference is now made to the enlarged sectional view of Fig. 4 which again shows the seal assembly 41 and the breather valve details provided in the left-hand end of the actuator tube 40 of Fig. 1. The breather valve assembly is again constructed largely of moulded molybdenum-filled plastic components and the assembly forms a closure for the end of the tube 40. Three main moulded components 101, 102 and 103 are mutually snap-fitted together after insertion of an inner bell-shaped piston member 104 carrying an annular diaphragm 105. The diaphragm has an inner peripheral bead 106 retained in a groove of 104 by a snap-in ring 107. A disc valve member 108 and a light spring 109 are placed in position before snapping component 101 into position on component 102 ensuring that spring 109 then urges 108 against a valve seat 110. Snapping together of the various components is achieved in the case of 103, 104 and the outer periphery 11 of the diaphragm, by moulded on catch fingers such as 112 spaced around the righthand end of moulding 102. Similarly, in the case of 101 and 102, snapping together is achieved by virtue of catch finger portions 113 spaced around the right-hand end of 101, these finger portions incorporating outward extending projections which snap into an inner annular groove 114 formed within the left-hand end of the tube 40. An o-ring seal 115 provides sealing between component 102 and the interior of tube 40. In the thus assembled breather valve arrangement the interior of tube 40 is in communication with region 116 on the left of the piston 104 via a passage 117 and region 116 in turn is in communication with valve member 108 via an axial aperture 119 through which a valve tappet 120 freely passes, tappet 120 being an extension of the piston 104. The left-hand side of valve 108 is in direct communication with the region 3 of the service portion of the actuator via a radial passage 121. It is further to be noted the region 122 interior of the piston 104 and the component 103 is a sealed region by virtue of the sealed peripheries of the diaphragm 105.

In operation of the breather valve of Fig. 4, when the actuator is at rest with no compressed air applied to either portion, the pressure sin chamber 3, region 122 and tube 40 will be at or near atmospheric. When compressed air is applied to the chamber 4 of the spring brake portion the volume 14 (Fig. 1) is reduced and the increasing pressure in tube 40 is relieved via passages 17, 119 and check valve 108 to the volume 3. From 3 such air flow is released via the service valve or relay valve as the case may be. Chamber 14 therefore resides at or near atmospheric pressure.

When the pressure in spring brake control chamber 4 is reduced to effect a brake application, the resultant reduction in pressure in chamber 14 enables the higher pressure contained in region 122 to cause piston 104 to move leftwards and tappet 120 lifts the valve element 108 off its seat thereby permitting air to be drawn back into tube 40 via passages 121, 119 and 117. A subsequent service brake application if made causes valve element 108 to reset after the pressure in 40 is restored to a sufficient level to enable piston 104 to move back to the position shown in the drawing to allow valve 108 to close on its seal.

Whist in the foregoing description of various forms of the breather valve the breather valve connect the spring chamber with a service brake actuator, in alternative embodiments the breather valve may be arranged to be connected to an alternative source of clean air or fluid.

## Claims

1. A fluid pressure operable actuator comprising a fluid pressure responsive member (36) forming a movable wall in a housing (2; 33) said wall separating a control pressure chamber (4) from a further chamber (14), said control pressure chamber (4) being arranged to receive a control fluid pressure to move said member (36) in a first direction and means operable to move said member (36) in a second direction in response to a reduction of said control pressure to apply a force to an output member (40) characterised by a normally closed breather valve (60,63; 75,72; 108,102) being provided in a fluid flow path between said further chamber (14) and a fluid source (3) and a valve actuator (64; 189; 120) for opening said breather valve in response to a reduction of the pressure in said further chamber below (14) a predetermined valve.

2. A fluid pressure operable actuator as claimed in claim 1 wherein said force output member (40) is a tubular member connected to said pressure responsive member (36) characterised in that said valve provides communication between said source (3) and said further chamber (14) via said tubular member (40).

3. A fluid pressure operable actuator as claimed in claim 2, characterised in that said valve and said valve actuator are carried in said tubular member (40).

4. A fluid pressure operable actuator as claimed in claim 1, 2 or 3, characterised in that said valve actuator comprises an aneroid device (64).

5. A fluid pressure operable actuator as claimed in claim 1, 2 or 3, characterised in that said valve actuator comprises a cylindrical body (73; 102) within which a piston (74; 104) is sealingly movable said piston (74; 104) having a projection (89; 102) for operating said valve (75; 108).

6. A fluid pressure operable actuator as claimed in claim 5, characterised in that said piston (74; 104) is sealingly movable in a bore of said body (73; 102).

7. A fluid pressure operable actuator as claimed in claim 5, characterised in that said piston (104) is provided with an annular diaphragm (105) the periphery of which is sealed to the said body (102).

8. A fluid pressure operable actuator as claimed in claim 6 or claim 7 characterised in that said body comprises two snap-together parts and is sealingly retained in said tubular member (40).

9. A fluid pressure operable actuator as claimed in any preceding claim characterised in that said valve is a check valve which permits fluid flow from said further chamber (14) towards said source.
